(19) Europäisches Patentamt / European Patent Office / Office européen des brevets

(11) **EP 4 215 891 B1**

(12) **EUROPÄISCHE PATENTSCHRIFT**

(45) Veröffentlichungstag und Bekanntmachung des Hinweises auf die Patenterteilung:
**30.07.2025  Patentblatt 2025/31**

(21) Anmeldenummer: **23167812.9**

(22) Anmeldetag: **13.04.2023**

(51) Internationale Patentklassifikation (IPC):
**G01M 3/22** *(2006.01)*      **G01M 3/32** *(2006.01)*

(52) Gemeinsame Patentklassifikation (CPC):
**G01M 3/3281; G01M 3/229**

(54) **VERFAHREN ZUR DICHTHEITSPRÜFUNG UND/ODER LECKAGEMESSUNG EINES BAUTEILS**

METHOD FOR TESTING THE TIGHTNESS AND/OR LEAKAGE OF A COMPONENT

PROCÉDÉ DE CONTRÔLE D'ÉTANCHÉITÉ ET/OU DE MESURE DE FUITE D'UN COMPOSANT

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**26.07.2023  Patentblatt 2023/30**

(73) Patentinhaber: **Pfeiffer Vacuum Technology AG**
**35614 Asslar (DE)**

(72) Erfinder:
- **Krahl, Dominik**
  **01920 Nebelschütz (DE)**
- **Arndt, Alexander**
  **08066 Zwickau (DE)**
- **Schurig, Philipp**
  **35440 Linden (DE)**
- **Konwitschny, Rudolf**
  **84036 Landshut (DE)**
- **Jacob, Maik**
  **01471 Radeburg (DE)**

(74) Vertreter: **Manitz Finsterwald**
**Patent- und Rechtsanwaltspartnerschaft mbB**
**Martin-Greif-Straße 1**
**80336 München (DE)**

(56) Entgegenhaltungen:
WO-A1-2022/099409      CN-A- 110 987 324
CN-A- 113 188 726

**Beschreibung**

Die Erfindung betrifft ein Verfahren zur Dichtheitsprüfung und/oder Leckagemessung eines Bauteils.

Kanalführende Bauteile (also Bauteile mit mindestens einem Kanal) können in verschiedenen Anwendungen zum Einsatz kommen. Beispielsweise können die kanalführenden Bauteile Bipolarplatten sein. Bipolarplatten sind Bestandteile von Brennstoffzellen. Unter einer an sich bekannten Brennstoffzelle wird im Sinne der Erfindung eine Vorrichtung verstanden, welche in der Lage ist, einen Teil der Energie aus der Reaktion eines Oxidationsmittels (z.B. Sauerstoff) mit einem Reduktionsmittel (z.B. Wasserstoff) direkt in elektrische Energie umzuwandeln. Die Dichtheit bzw. Leckagefreiheit von solchen Bauteilen kann einerseits notwendig sein, um ein ordnungsgemäßes Funktionieren des Bauteils sicherzustellen. Andererseits können von Lecks auch Gefahren ausgehen. Beispielsweise könnte bei einer Brennstoffzelle entweichender Wasserstoff in Verbindung mit Sauerstoff aus der Umgebung oder mit durch ein weiteres Leck aus der Brennstoffzelle entweichendem Sauerstoff Explosionen verursachen. Technische Geräte, welche mit zumeist leicht entzündlichen Medien arbeiten, unterliegen hohen Sicherheitsstandards und unterliegen dementsprechenden Normen.

Es ist daher erforderlich, solche Bauteile zuverlässig und effizient auf Dichtheit zu überprüfen und Leckagemessungen durchzuführen.

Bei einer beispielhaften Vorrichtung zur Dichtheitsprüfung aus dem Stand der Technik wird jeder Kanal einzeln vermessen. Es wird also nacheinander für jeden Kanal die Dichtheit bzw. Leckagerate separat ermittelt bzw. gemessen. Zudem muss bei Erkennung einer Leckage ermittelt werden, wohin die Leckage führt (also beispielsweise in einen Kanal bzw. in welchen anderen Kanal oder in ein umgebendes Volumen). Für verschiedenartige Bauteile, die sich durch die Anordnung der Kanäle und insbesondere durch die Anordnung der Kanaleingänge und Kanalausgänge unterscheiden, sind daher verschiedene Vorrichtungen zum Durchführen der Dichtheitsprüfung und Leckagemessung nötig. Es ist daher im Stand der Technik nicht möglich, verschiedene Bauteile mit einer einzigen Vorrichtung zu prüfen. Ferner dauert im Stand der Technik die Prüfung gewöhnlich sehr lange, da Messungen für jeden Kanal separat erfolgen.

CN 113 188 726 A offenbart ein Graphit-Bipolarplatten-Leckerkennungssystem und ein Verfahren zur Durchführung der Leckerkennung an einer Graphit-Bipolarplatte. Das System umfasst eine Luftquelle zur Leckerkennung; eine Lufteinlass-Steuerbaugruppe, die stromabwärts der Leckerkennungs-Luftquelle positioniert ist und zum unabhängigen Öffnen/Absperren einer Versorgungsleitung der Leckerkennungs-Luftquelle verwendet wird; einen Leckerkennungs-Presssitzmechanismus, der sich stromabwärts der Lufteinlass-Steuerbaugruppe befindet und mit einem Aufnahmehohlraum, drei Hohlraum-Einlass-Erkennungskanälen und drei Hohlraum-Auslass-Erkennungskanälen, den drei Hohlraum-Einlass-Erkennungskanälen und den drei Hohlraum-Auslasskanälen ausgestattet ist.

CN 110 987 324 A offenbart eine Vorrichtung und ein Prüfverfahren für die Luftdichtheitsprüfung einer Brennstoffzelle. Das Luftdichtheitsprüfgerät für Brennstoffzellen besteht aus einer zu prüfenden Zelle, einer Hauptrohrleitung und einem ersten Einlasszweigrohr. Die Hauptleitung ist mit dem ersten Einlasszweigrohr verbunden, und das andere Ende des ersten Einlasszweigrohrs ist mit einem ersten Strömungswegeinlass verbunden. Das erste Einlasszweigrohr ist mit einem ersten Durchflussmesser, einem ersten Druckmesser und einem ersten Steuerventil ausgestattet. Die Vorrichtung umfasst weiterhin ein zweites Einlasszweigrohr und ein zweites Auslasszweigrohr; ein Ende des zweiten Einlasszweigrohrs ist mit der Hauptrohrleitung verbunden und das andere Ende des zweiten Einlasszweigrohrs ist mit einem zweiten Strömungswegeinlass verbunden; ein zweites Steuerventil ist am zweiten Einlasszweigrohr angeordnet; und ein drittes Steuerventil, ein dritter Durchflussmesser und ein dritter Druckmesser sind weiterhin am zweiten Auslasszweigrohr angeordnet.

WO 2022/099409 A1 offenbart Verfahren und Vorrichtungen, die für End-of-Line-Tests von elektrochemischen Stapeln nach deren Zusammenbau und vor dem Einfahren oder Betrieb des Stapels verwendet werden können. Es werden Schnelltestverfahren und parallel durchführbare Testverfahren zum Erkennen unterschiedlicher Arten von Defekten beschrieben. Ausführungsformen der Verfahren und Vorrichtungen können zum Testen von Polymerelektrolytmembran-Brennstoffzellenstapeln und Elektrolyseuren verwendet werden.

Es ist eine Aufgabe der Erfindung, ein Verfahren bereitzustellen, womit verschiedene Bauteile und insbesondere die in den Bauteilen ausgebildeten Kanäle effizient auf Dichtheit bzw. Leckage geprüft werden können. Diese Aufgabe wird durch ein Verfahren zur Dichtheitsprüfung und/oder Leckagemessung eines Bauteils mit den Merkmalen des Anspruchs 1 dadurch gelöst, dass das Verfahren aufweist: Aufbringen eines vorgegebenen Eingangszustands an einer Eingangskonfiguration von Kanälen des Bauteils; Messen eines Ausgangszustands an einer Ausgangskonfiguration von Kanälen des Bauteils; und Ermitteln eines Dichtheitszustands und/oder einer Leckagerate des Bauteils basierend auf dem Messen. Dabei kann die Eingangskonfiguration mindestens zwei Kanäle des Bauteils aufweisen und die Ausgangskonfiguration mindestens einen anderen Kanal des Bauteils aufweisen, oder es kann die Eingangskonfiguration mindestens einen Kanal des Bauteils aufweisen und die Ausgangskonfiguration mindestens zwei andere Kanäle des Bauteils aufweisen; wobei das Aufbringen und das Messen für eine Mehrzahl von unterschiedlichen Messkonfigurationen ausgeführt wird, wobei jede Messkonfiguration eine bestimmte Eingangskonfiguration und eine bestimmte Ausgangskonfiguration aufweist; wobei das Verfahren ferner aufweist: Ermitteln der Mehrzahl von unterschiedlichen Messkonfigurationen so, dass jeder Kanal in Kombination mit jedem anderen Kanal in mindestens einer Messkonfiguration der Mehrzahl von Messkonfigurationen auftritt; wobei der Dichtheitszustands und/oder die Leckagerate des Bauteils basierend auf dem Aufbringen und dem Messen für die Mehrzahl von unterschiedlichen Messkonfigurationen ermittelt wird; und wobei für aufeinanderfolgende Messungen der jeweilige Eingangszustand unterschiedliche Drücke und/oder unterschiedliche Konzentrationen und/oder unterschiedliche chemische Elemente und/oder unterschiedliche chemische Verbindungen und/oder unterschiedliche Mischungen von chemischen Stoffen aufweist.

Leckagemessung kann dabei ein Messen oder Bestimmen einer Leckagerate (also eine quantitative Messung über die Größe des Lecks) und/oder ein Messen oder Bestimmen eines Leckageweges (also Informationen darüber, ob ein Leck z.B. zu einem anderen Kanal oder in ein umgebendes Volumen, also aus dem Bauteil heraus, besteht) enthalten.

Die Leckagerate ist dabei eine Messgröße (die also direkt oder indirekt gemessen wird) und Dichtheit ist eine Prüfgröße (die also aus anderen Messungen abgeleitet wird). Beispielsweise kann das Bauteil als funktionsgerecht dicht (also Dichtheit aufweisend) bezeichnet werden, falls eine gemessene Leckagerate von 0 in allen Kanälen bzw. Kanalkombinationen vorliegt.

Der Vollständigkeit halber sei an dieser Stelle erwähnt, dass in der Praxis die Angabe einer Leckagerate von 0 nach DIN EN 1779 unzulässig ist. Daher wird in der Praxis ein Bauteil als funktionsgerecht Dicht bezeichnet, wenn es eine Leckagerate aufweist, die kleiner ist als die jeweilige maximal zulässige Leckagerate. Die maximal zulässige Leckagerate ist dabei eine Eigenschaft des Bauteils und ist häufig als solche spezifiziert.

Eine Kombination einer Eingangskonfiguration mit einer Ausgangskonfiguration kann als Messkonfiguration bezeichnet werden. Eine Messkonfiguration kann als "einflussfrei" bezeichnet werden, wenn kein Kanal sowohl in der Eingangskonfiguration als auch in der Ausgangskonfiguration auftritt; damit ist eine Messung basierend auf einer solchen Messkonfiguration bei fehlerfreien Bauteilen also frei von Einflüssen der Kanäle untereinander.

Der Eingangszustand kann ein Zustand sein, der für alle Kanäle aus der Eingangskonfiguration gemeinsam oder gleich ist, beispielsweise ein vorgegebener Druck eines bestimmten gasförmigen Stoffes. Der Ausgangszustand kann für alle Kanäle aus der Ausgangskonfiguration gemeinsam gemessen werden.

Bei Bauteilen ohne Leck wird der Ausgangszustand bei einflussfreien Messkonfigurationen unabhängig vom Eingangszustand sein. Ändert sich der Ausgangszustand bei einer Änderung des vorgegebenen Eingangszustands, kann auf ein Leck geschlossen werden; insbesondere kann dann ein Leck zwischen mindestens einem Kanal aus der Eingangskonfiguration und einem Kanal aus der Ausgangskonfiguration erkannt werden.

Mit anderen Worten wird ein Verfahren bereitgestellt, das das Messen von Leckageraten und/oder die Dichtheitsprüfung von kanalführenden Bauteilen sowie von Kanälen kanalführender Bauteile ermöglicht. Insbesondere kann geprüft werden, ob das Bauteil einen Kanal mit einem Leck hat, oder ob alle Kanäle des Bauteils dicht sind. Zudem kann ermittelt werden, wohin eine Leckage auftritt, also ob beispielsweise eine Leckage zu einem anderen Kanal oder in ein umgebenes Volumen auftritt. Mit dem erfindungsgemäßen Verfahren wird eine quantitative, integrale Dichtheitsprüfung von kanalführenden Prüfobjekten ermöglicht.

Mit dem erfindungsgemäßen Verfahren ist eine deutliche Reduzierung der Messzeiten erreichbar. Dies wird insbesondere dadurch erreicht, dass mehrere Kanäle gleichzeitig gemessen werden. Ergibt sich dann, dass die mehreren Kanäle als Gesamtheit dicht sind, dann ist jeder einzelne Kanal der mehreren Kanäle dicht. Durch Messung mehrerer Kombinationen von Kanälen kann sogar für jeden einzelnen Kanal die Dichtheit überprüft werden und/oder die Leckagerate und/oder der Leckageweg ermittelt werden.

Die Messkonfigurationen (also die jeweiligen Kombinationen von Eingangskonfiguration und Ausgangskonfiguration) können derart gewählt werden, dass kein Kanal des Bauteils in der Eingangskonfiguration (also als Eingang) und zugleich in der Ausgangskonfiguration (also als Ausgang) vorgesehen ist. Somit werden unter allen möglichen Kombinationen von Kanälen nur die Kombinationen von Kanälen untersucht, die als Kandidaten für Messungen geeignet sind.

In einer Ausgestaltung weist der Eingangszustand einen vorgegebenen Druck und/oder eine vorgegebene Konzentration und/oder ein vorgegebenes chemisches Element und/oder eine vorgegebene chemische Verbindung und/oder eine vorgegebene Mischung von chemischen Stoffen auf, und das Messen des Ausgangszustands weist ein Detektieren eines Druckes und/oder einer Konzentration und/oder des vorgegebenen chemischen Elements und/oder der vorgegebenen chemischen Verbindung und/oder der vorgegebenen Mischung von chemischen Stoffen auf. Der vorgegebene Eingangszustand entspricht dem gemessenen Ausgangszustand also dahingehend, dass bei einem Bauteil mit einem undichten Kanal in der Eingangskonfiguration eine Änderung des Ausgangszustands hin zum vorgegebenen Eingangszustand auftritt, falls der undichte Kanal in der Eingangskonfiguration undicht ist hin zu einem Kanal aus der Ausgangskonfiguration.

In einer Ausführungsform wird das Aufbringen und das Messen für eine Mehrzahl von unterschiedlichen Messkonfigurationen ausgeführt, wobei jede Messkonfiguration eine bestimmte (für verschiedene Messkonfigurationen möglicherweise verschiedene) Eingangskonfiguration und eine bestimmte (für verschiedene Messkonfigurationen möglicherweise verschiedene) Ausgangskonfiguration aufweist, und der Dichtheitszustands und/oder die Leckagerate des Bauteils werden basierend auf dem Aufbringen und dem Messen für die Mehrzahl von unterschiedlichen Messkonfigurationen ermittelt. Anschaulich wird also für verschiedene Messkonfigurationen gemessen.

In einer Ausgestaltung kann für aufeinanderfolgende Messungen der jeweilige Eingangszustand unterschiedliche Drücke und/oder unterschiedliche Konzentrationen und/oder unterschiedliche chemische Elemente und/oder unterschiedliche chemische Verbindungen und/oder unterschiedliche Mischungen von chemischen Stoffen aufweisen.

Die Verwendung von verschiedenen Elementen, Verbindungen oder Mischungen ermöglicht eine schnelle Abfolge der Messungen, da eventuell noch in der Vorrichtung oder in dem Bauteil verbleibendes Medium bei einer nachfolgenden Messung nicht berücksichtigt werden muss, da ein anderes Medium (also ein anderes Element, eine andere Verbindung, oder eine andere Mischung) verwendet wird.

Die Verwendung von verschiedenen Drücken oder Konzentrationen ermöglicht es, aufeinanderfolgende Messungen aufgrund der Unterschiede in den Drücken oder in der Konzentration des Mediums zu unterscheiden, so dass eine schnelle Abfolge von Messungen möglich ist.

Die Messkonfigurationen können derart ausgewählt werden, dass die Kanäle der Eingangskonfiguration komplementär sind zu den Kanälen der Ausgangskonfiguration. Anschaulich tritt also kein Kanal sowohl in der Eingangskonfiguration als auch in der Ausgangskonfiguration auf. Dabei wird gemäß einer Ausführungsform nicht die Gesamtheit dieser möglichen Messkonfigurationen untersucht, sondern es kann nur eine Teilmenge untersucht werden, die derart ausgewählt ist, dass alle relevanten Leckagewege gemessen werden können.

In einer Ausführungsform wird die Mehrzahl von unterschiedlichen Messkonfigurationen so ermittelt, dass jeder Kanal in Kombination mit jedem anderen Kanal in mindestens einer Messkonfiguration der Mehrzahl von Messkonfigurationen auftritt. Damit ist jeder Leckageweg in zumindest einer Messkonfiguration enthalten, d.h. jeder Leckageweg führt in mindestens einer Messkonfiguration zu einer detektierbaren Leckage. Das Auftreten von zwei Kanälen in Kombination bedeutet, dass einer der Kanäle in der Eingangskonfiguration auftritt, während der andere Kanal in der Ausgangskonfiguration auftritt.

In einer Ausführungsform wird eine jeweilige Leckagerate für die Mehrzahl von Messkonfigurationen ermittelt und es wird eine Leckagerate zwischen zwei Kanälen basierend auf den jeweiligen Leckageraten für die Mehrzahl von Messkonfigurationen ermittelt. Damit kann dann aus Messungen für verschiedene Messkonfigurationen auf die Leckagerate zwischen zwei einzelnen Kanälen geschlossen werden.

Mit der Erfindung wird eine Leckagemessung und/oder Dichtheitsprüfung von kanalführenden Bauteilen ermöglicht.

Das erfindungsgemäße Verfahren kann dabei beispielsweise durch die Verwendung der Adapterplatte und geeigneter Ventilstellungen an das zu prüfende Bauteil, das auch als Prüfling bezeichnet werden kann, angepasst werden, ohne dass ein komplett neues Verfahren nötig wäre.

Das erfindungsgemäße Verfahren kann zur Dichtheitsprüfung und Leckagewegmessung an Bipolarplatten eingesetzt werden. Weitere Anwendungsgebiete sind Monoplatten, Wärmetauscher sowie alle Prüfobjekte mit mehr als einem Prüfraum und bei denen der sequenzielle Einsatz mehrerer Prüfgase Prozessschritte spart, wie beispielsweise mit Nachevakuieren und Spülen befasste Anwendungen.

Die hierin beschriebenen Aspekte der Erfindung, also das Verfahren zur Dichtheitsprüfung und/oder Leckagemessung eines Bauteils andererseits, lassen sich vorteilhaft im Sinne aller zum jeweils anderen Aspekt beschriebenen Ausführungsformen weiterbilden.

Die Erfindung wird nachfolgend lediglich beispielhaft anhand der schematischen Zeichnung erläutert.

Fig. 1             zeigt skizzenhaft den schematischen Aufbau einer Messanordnung mit einer Vorrichtung.

Fig. 2             zeigt skizzenhaft einen Schnitt durch einen Aufbau einer Vorrichtung.

Fig. 3             zeigt schematisch ein Modell eines kanalführenden Bauteils innerhalb einer Vorrichtung.

Fig. 4             zeigt einen möglichen Aufbau mit dem kanalführenden Bauteil aus Fig. 3.

Fig. 5             zeigt schematisch alle Messkonfigurationen für ein kanalführendes Bauteil in einer zur Leckagemessung ausgebildeten Vorrichtung.

Fig. 6A und Fig. 6B     zeigen schematisch Messkonfigurationen, welche nur bekannte Einflüsse der Leckagewege aufzeigen.

Fig. 7A, Fig. 7B       zeigen exemplarisch das Auffinden von einflussfreien Messkonfigurationen.

Fig. 8             zeigt ein Flussdiagramm eines Ablaufs einer vollständigen Prüfung einer kanalführenden Platte mit drei Kanälen sowie einem umgebenden Messvolumen.

Fig. 9                  zeigt ein Flussdiagramm eines erfindungsgemäßen Verfahrens.

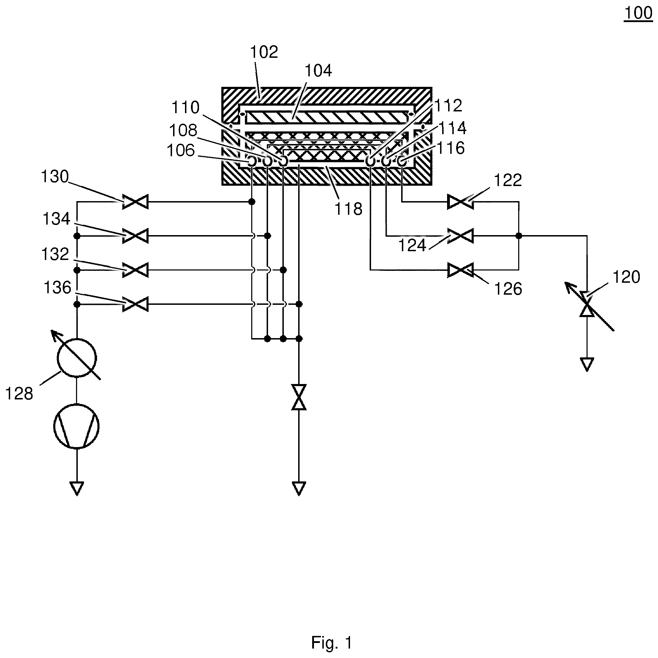

Fig. 1 zeigt skizzenhaft den schematischen Aufbau einer Messanordnung 100 mit einer Vorrichtung. Es ist eine Vorrichtung 102 zur Dichtheitsprüfung und/oder Leckagemessung eines Bauteils 104 mit einer Mehrzahl von Kanälen gezeigt. Dabei kann das Bauteil 104 beispielsweise eine Bipolarplatte sein, und die Kanäle können jeweils zwei Öffnungen in der Bipolarplatte (beispielsweise einem Eingang und einem Ausgang) zugeordnet sein. Beispielsweise kann die Bipolarplatte sechs Öffnungen haben, um ein Kühlmittel (mit Eingang 112 und Ausgang 106), ein Oxidationsmittel (mit Eingang 114 und Ausgang 108) und ein Reduktionsmittel (mit Eingang 116 und Ausgang 110) durch die Bipolarplatte hindurchzuleiten. Das Bauteil 104 kann in der Vorrichtung 102 zumindest teilweise durch ein umgebendes Volumen 118 umschlossen sein.

In einem Beispiel kann auf zumindest eine Teilmenge der jeweiligen Eingänge 112, 114, 116 der Kanäle ein Eingangszustand aufgebracht werden, beispielsweise durch eine Druckvorgabe aus einer Druckquelle 120. Mittels Ventilen 122, 124, 126 können ausgewählte Kanaleingänge 112, 114, 116 mit der Druckquelle 120 verbunden werden.

In einem Beispiel kann an zumindest eine Teilmenge der jeweiligen Ausgänge 106, 108, 110 der Kanäle und/oder dem umgebenden Volumen 118 ein Ausgangszustand gemessen werden, beispielsweise mittels einer Messeinrichtung 128. Mittels Ventilen 130, 132, 134, 136 können ausgewählte Kanalausgänge 106, 108, 110 und/oder das umgebende Volumen 118 mit der Messeinrichtung 128 verbunden werden.

Die Vorrichtung zur Messung und/oder Prüfung der Dichtigkeit mindestens eines kanalführenden Bauteils kann einen mindestens dreiteiligen Aufbau mit einem Aufnahmeelement, einem Verschlusselement sowie einem Druckelement enthalten. Das Aufnahmeelement und das Verschlusselement können zum Ausbilden einer gemeinsamen gasdichten Dichtfläche ausgebildet sein. Das Aufnahmeelement und das Verschlusselement können lösbar beweglich zueinander angeordnet sein. Das Aufnahmeelement kann zur formschlüssigen Aufnahme mindestens eines kanalführenden Bauteils ausgebildet sein. Das Druckelement kann zur kraftschlüssigen Verbindung des kanalführenden Bauteils mit dem Aufnahmeelement ausgebildet sein. Die Vorrichtung kann mindestens zwei Anschlüsse und Leitungen, geeignet zur Leitung gasförmiger Medien, sowie mindestens eine Messeinrichtung enthalten.

Die Messeinrichtung kann eingerichtet sein zum Analysieren eines gasförmigen Mediums in seiner Beschaffenheit und/oder in seinem Bewegungszustand. Unter der Analyse des Bewegungszustandes kann dabei beispielsweise eine Durchflussmessung verstanden werden und unter der Analyse der Beschaffenheit des gasförmigen Mediums kann eine Analyse eines Messgeräts verstanden, welches dazu ausgebildet ist, die stoffliche Zusammensetzung des gasförmigen Mediums zu bestimmen; beispielsweise kann dafür ein Massenspektrometer eingesetzt werden.

In Beispielen sind die Messgeräte geeignet zur Bestimmung der stofflichen Zusammensetzung ausgewählt aus: Massenspektrometern, insbesondere Sektorfeld-Masssenspektrometern und QMS (Quadrupol-Massenspektrometer), OES (optische Emissionsspektroskope), ΔP (Druckänderungs- oder Differenzdruck) - Messeinrichtungen, Durchflussmessgeräten von unterschiedlichen Einlassdruckbereichen gegen unterschiedliche Auslassdruckbereiche, wobei die Druckbereiche mehr als $10^{-7}$ hPa und beispielsweise weniger als 5 MPa Absolutdruck, beispielsweise mehr als $10^{-6}$ hPa und weniger als 4,5 MPa, beispielsweise mehr als $10^{-4}$ hPa und weniger als 4 MPa sein können.

Die gasförmigen Medien werden dabei bevorzugt ausgewählt aus Ammoniak, Kohlenwasserstoffen, fluorierten Kohlenwasserstoffen, Hydrofluorolefinen, Wasserdampf, Stickstoff, Luft und Sauerstoff sowie aus Prüfgasen, welche eine Molare Masse von 4 u, 3 u oder 2 u aufweisen, wobei u die vereinheitlichte atomare Masseneinheit symbolisiert.

Mit der Beispielvorrichtung, insbesondere durch die Verwendung des Druckelementes, ist ein dickenunabhängiges Einspannen der Bipolarplatte (BPP) bei gleichzeitiger Abdichtung der BPP-Umgebung zu erreichen. Des Weiteren kann vorteilhaft jene Kraft modular angepasst werden, welche die BPP durch das Druckelement und das Aufnahmeelement erfährt.

Gemäß einem Beispiel können die internen Kanäle der eingelegten Bipolarplatte zielgerichtet mit Druck beaufschlagt und/oder evakuiert werden. Somit ist die zielgerichtete Druckbeaufschlagung jeder denkbaren Messkonfiguration ermöglicht. Damit ist auch eine Druckbeaufschlagung der BPP-Umgebung während des Mess- bzw. Prüfbetriebes möglich.

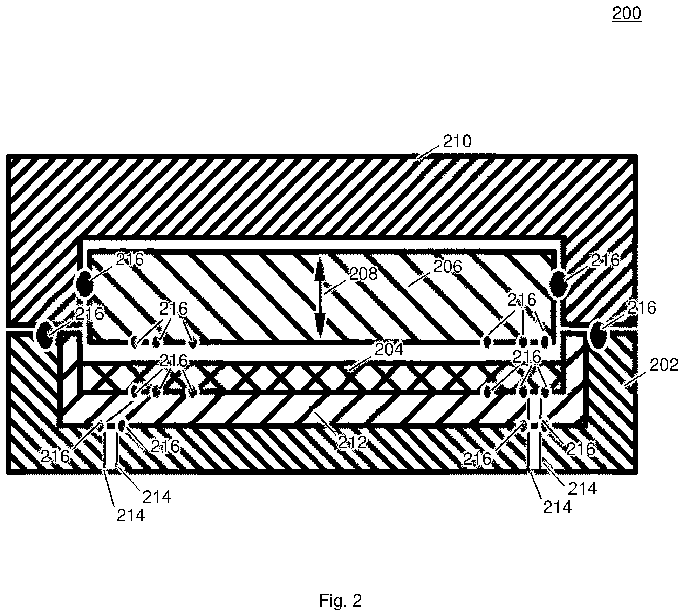

Fig. 2 zeigt skizzenhaft einen Schnitt 200 durch einen Aufbau einer Vorrichtung gemäß einem Beispiel.

Dabei ist der mehrteilige Aufbau mit einer Aufnahmeeinheit 202 (die als Bett für das Bauteil 204, beispielsweise eine Bipolarplatte, dienen kann), einem Druckelement 206 (welches beispielsweise als Kolben ausgestaltet sein kann) und einem Verschlusselement 210 (welches auch als Kolbenführung dienen kann) gezeigt. Beispielsweise kann das kanalführende Bauteil 204 sechs Öffnungen haben, um ein Kühlmittel, ein Oxidationsmittel und ein Reduktionsmittel hindurchzuleiten. Diese Öffnungen sind je paarweise miteinander durch Kanäle verbunden. Das Druckelement 206 kann sich entlang einer Bewegungsrichtung 208 bewegen, um so das Bauteil 204 unabhängig von der Dicke des Bauteils 204 sicher und mit einer einstellbaren Kraft gegen das Aufnahmeelement 202 zu drücken.

Um Bauteile 204 mit verschiedenen Kanälen (beispielsweise mit unterschiedlich vielen Kanälen oder mit unterschiedlichen Positionen, an denen die Kanäle aus bzw. in das Bauteil 204 geführt sind) vermessen zu können, kann eine Adapterplatte 212 zwischen der Aufnahmeeinheit 202 und dem Bauteil 204 bereitgestellt werden. Die Adapterplatte 212 kann die Eingänge bzw. Ausgänge 214 der Aufnahmeeinheit 202 an die jeweiligen Kanaleingänge und Kanalausgänge an dem Bauteil 204 leiten.

In Fig. 2 sind verschiedene Dichtungen 216 dargestellt, die die einzelnen Bestandteile der Vorrichtung und das Bauteil 204 abdichten.

Die BPP kann flächig in eine Adapteraufnahme eingelegt werden. Diese Aufnahme kann Öffnungen und mindestens eine Dichtung enthalten, welche dazu geeignet ist, kraftschlüssig eine gasdichte Verbindung herzustellen. Die Öffnungen der Adapteraufnahme zur Kontaktierung der Öffnungen der BPP können durch die Adapterplatte hindurchgeführt sein und an der gegenüberliegenden Seite der Adapteraufnahme wiederum in Öffnungen münden. Diese Öffnungen können für unterschiedliche Adapteraufnahmen immer gleich sein und als standardisierte Adapteröffnungen bezeichnet werden.

In einem Beispiel enthält die Vorrichtung einen Kammerboden und einen Kammerdeckel. Der Kammerboden kann dabei mit Öffnungen versehen sein, wobei diese Öffnungen als Gegenstück zu den Adapteröffnungen ausgebildet sind und die Nennweite der standardisierten Adapteröffnungen entsprechen. In einem Beispiel betragen die Nennweiten der Öffnungen ¼", was einem Durchmesser von etwa 6 mm entspricht.

In einem Beispiel sind die kanalführenden Bauteile flach ausgeführt. Beispielsweise handelt es sich bei den kanalführenden Bauteilen um Bipolarplatten, die auch als BPP bezeichnet werden können. Bipolarplatten sind essenzielle Bestandteile von Brennstoffzellen. Unter einer an sich bekannten Brennstoffzelle wird eine Vorrichtung verstanden, welche in der Lage ist, einen Teil der Energie aus der Reaktion eines Oxidationsmittels (bspw. Sauerstoff) mit einem Reduktionsmittel (bspw. Wasserstoff) direkt in elektrische Energie umzuwandeln. Technische Geräte, welche mit zumeist leicht entzündlichen Medien arbeiten, unterliegen hohen Sicherheitsstandards und unterliegen dementsprechenden Normen.

Des Weiteren sind als nicht erschöpfendes Beispiel Monoplatten als kanalführende Bauteile zu verstehen. Aus den genannten Monoplatten werden häufig Bipolarplatten gefügt.

Die bestehenden Systeme zur Durchführung von Messungen und/oder Prüfungen nach den aktuell gültigen Normen sind im industriellen Maßstab technisch aufwendig und häufig zeitintensiv.

Aus dem Stand der Technik sind keine adaptiven Vorrichtungen bekannt. Der erfindungsgemäße Gegenstand umfasst durch seinen modularen Aufbau die Möglichkeit mechanischer Adapter. Dabei können bei der Verwendung geänderter Geometrien der kanalführenden Bauteile die Aufnahmen seitens des erfindungsgemäßen Gegenstandes einfach getauscht werden. Dies ist vorteilhaft, da auf diese Weise die Lebensdauer bei einer industriellen Verwertung steigt. Des Weiteren sinkt der Wartungs- bzw. Reinigungsaufwand, da in diesem modular ausgelegten System die adaptive Aufnahme getrennt von der restlichen Anlage gereinigt bzw. gewartet werden kann.

Mit der Beispielvorrichtung kann die Spannkraft der Vorrichtung zum Abdichten des kanalführenden Bauteils variabel einstellbar sein. Dies ermöglicht eine fortlaufende Optimierung der Testparameter ohne Neufertigung. Durch diese variable Spannkraft kann zudem auf variierende Prüfbedingungen innerhalb eines Messdurchgangs reagiert werden, wodurch eine besonders bipolarplatten-schonende Prüfung ermöglicht wird. Dies reduziert die Wahrscheinlichkeit von prüfbedingten Materialschäden an den Bipolarplatten.

Des Weiteren bietet die Vorrichtung den Vorteil, dass die Umgebung der Bipolarplatte druckbeaufschlag und evakuiert werden kann.

Ferner ermöglicht die adaptive Vorrichtung die Prüfung von Prüfobjekten mit hohem Toleranzbereich ohne Umbau oder weitere Maßnahmen.

Endplatten sind oft etwas dicker aufgebaut. Diese Platten können in derselben Aufnahme geprüft werden ohne zusätzliche Umbauten, Rüstzeiten, Ausschleusen oder andere Maßnahmen.

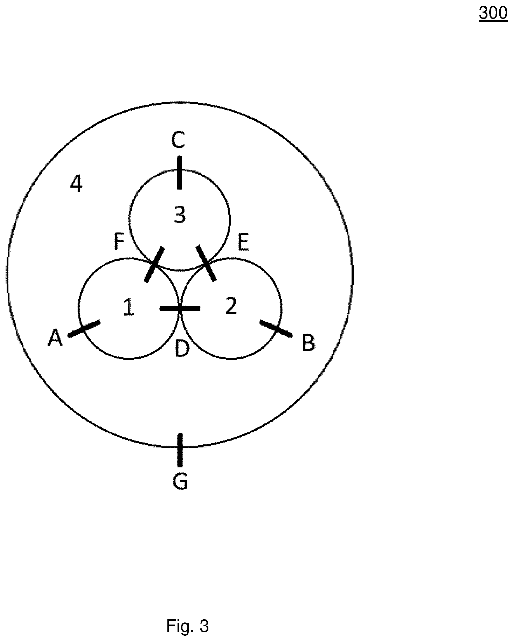

Fig. 3 zeigt schematisch ein Modell 300 eines kanalführenden Bauteils innerhalb der Vorrichtung gemäß einem Beispiel.

Das kanalführende Bauteil enthält dabei die Kanäle 1, 2 und 3 sowie ein umgebendes Volumen 4. Die theoretisch möglichen Leckagewege sind durch die Buchstaben A, B, C, D, E, F und G symbolisiert. Dabei symbolisiert A den Leckageweg zwischen Kanal 1 und dem umgebenden Volumen 4, B den Leckageweg zwischen Kanal 2 und dem umgebenden Volumen, C den Leckageweg zwischen Kanal 3 und dem umgebenden Volumen, D den Leckageweg zwischen Kanal 1 und Kanal 2, E den Leckageweg zwischen Kanal 2 und Kanal 3, und F den Leckageweg zwischen Kanal 1 und Kanal 3. Ferner ist in Fig. 3 ein Leckageweg G zwischen dem umgebenden Volumen der Vorrichtung und einer Umgebung der Vorrichtung dargestellt. Dieser Leckageweg kann aber bei sichergestellter Dichtheit der Vorrichtung gegenüber der Umgebung unberücksichtigt bleiben.

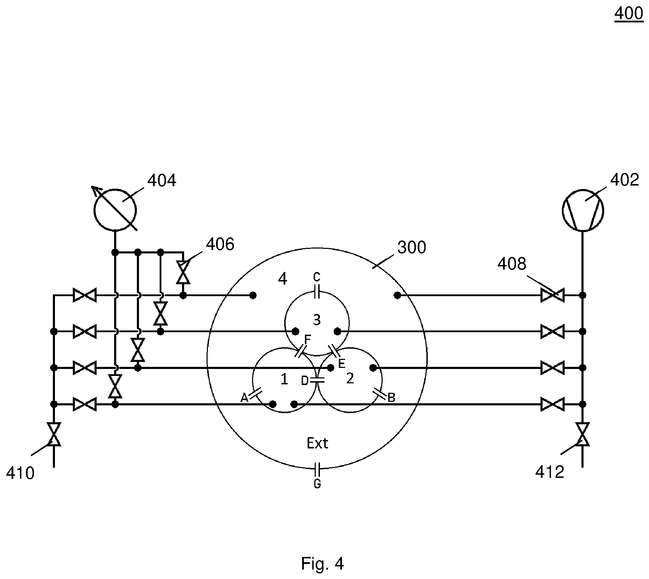

Fig. 4 zeigt einen möglichen Aufbau 400 gemäß einem Beispiel mit dem kanalführenden Bauteil 300 aus Fig. 3. Eine Druckquelle 404 ist mittels Ventile mit dem Bauteil 300 verbunden. Beispielsweise ist die Druckquelle 404 mittels Ventil 408 mit dem umgebenden Volumen 4 verbunden. Eine Messvorrichtung 402 ist mittels Ventile mit dem Bauteil 300 verbunden. Beispielsweise ist die Messvorrichtung 402 mittels Ventil 406 mit dem umgebenden Volumen 4 verbunden. Die Ventile 410 und 412 können zum Belüften der Vorrichtung gemäß dem gezeigten Aufbau 400 verwendet werden. Durch geeignete Ventileinstellungen (also Einstellungen der Ventile zum Sperren bzw. Durchführen oder Durchleiten) können verschiedene Messkonfigurationen gemessen werden. Unter dem Messen einer Messkonfiguration wird dabei das Beaufschlagen mindestens eines Kanals mit einem Medium unter einem gegebenen Druck verstanden, wobei mindestens ein weiterer Kanal, welcher mit dem mindestens einen druckbeaufschlagten Kanal nicht identisch ist, von einer geeigneten Messapparatur vermessen wird. Dabei hat die physikalische Nachweisgrenze einen Einfluss auf die Eignung des Messmittels.

In einem Ausführungsbeispiel enthält ein Verfahren zur Messung der Leckagewege und/oder zur Prüfung auf Dichtigkeit von kanalführenden Bauteilen die folgenden Schritte:

1. Bestimmung aller Eingangs- bzw. Ausgangskonfigurationen,
2. Auswahl von einflussfreien Messkonfigurationen und
3. Messen der ausgewählten Messkonfigurationen.

Die Messergebnisse bilden in ihrer Zusammenschau jeweils unterschiedliche Leckagewege ab. Durch die folgenden Gleichungen kann aus den Messergebnissen auf die nicht direkt durch Messung zugänglichen kanalspezifischen Leckageraten geschlossen werden.

Einflussfreie Messkonfigurationen können in eine Matrixschreibweise überführt werden. Dabei entsprechen die Bezeichnungen von Zeilen und Spalten jeweils die Nummerierung der einzelnen Kanäle oder Kavitäten. Im Folgenden, nicht beschränkenden Beispiel, werden wie beispielsweise in Fig. 3 veranschaulicht die Leckagewege mit den Buchstaben A, B, C, D, E und F sowie G symbolisiert. Die Buchstaben A, B und C symbolisieren jeweils den Leckageweg aus einem Kanal in das umgebende Volumen, D, E und F spiegeln hier die Leckagewege zwischen einzelnen Kanälen ohne das umgebende Volumen wider.

Der Buchstabe G symbolisiert hierbei den Leckageweg, welcher zwischen der Messvorrichtung und der Umgebung vorherrscht. Dieser Leckageweg ist ein Charakteristikum der verwendeten Vorrichtung und wird daher im Folgenden vernachlässigt.

So verallgemeinert sich eine Matrixdarstellung mit den Elementen $m_{ij}$ für die Wechselwirkung der Kanäle mit Druckbeaufschlagung und den Kanälen eines anhängigen Messgerätes zu:

$$[Druck \rightarrow Messger\ddot{a}t] = \begin{pmatrix} 0 & D & F & A \\ D & 0 & E & B \\ F & E & 0 & C \\ A & B & C & 0 \end{pmatrix},$$

wobei für die Leckagerate L aller Leckagewege gilt:

$$L = \frac{1}{2} \cdot \sum_{i,j}^{n} m_{ij} \ .$$

Die Koeffizienten der Einträge in einer solchen Matrix sind im Falle der einflussfreien Messkonfigurationen ausschließlich die Werte 1 und 0. Der Wert 1 wird dabei für einen möglichen Leckageweg verwendet, der Wert 0 für ein definitives Fehlen eines solchen.

Außerhalb der einflussfreien Messkonfigurationen kann der Koeffizient eines Leckageweges nicht eindeutig auf einen der Werte 0 oder 1 festgelegt werden, da hier Prozesse wie bspw. Diffusion ein Übersprechen zwischen den Leckagewegen ermöglichen.

Die Leckagewege einzeln zu vermessen (also A, B, C, D, E und F jeweils einzeln), ist aufgrund ihrer gegenseitigen Abhängigkeit nicht immer möglich.

Lediglich der Leckageweg G kann beispielsweise durch eine sog. Hintergrundmessung oder Untergundmessung einzeln bestimmt werden, da dieser ein Charakteristikum der Vorrichtung ist. Insbesondere zu berücksichtigen ist dieser Leckageweg, wenn das umgebende Volumen das gemessene Volumen ist. In diesem Falle gilt für den gesamten Leckageweg:

$$L' = L + L(G).$$

Dabei stellt L(G) die einzeln gemessene Leckrate des Leckagewegs G dar.

Je einem Kanal sind immer mindestens drei Leckagewege zugeordnet.

Beispielsweise werden in der eingeführten Schreibweise die Beaufschlagungen je eines Kanals in einflussfreier Konfiguration dargestellt:

- Kanal 1 → Komplement (1 → 2 & 3 & 4)

$$[\,1 \to 2\&3\&4\,] = \begin{pmatrix} 0 & D & F & A \\ D & 0 & 0 & 0 \\ F & 0 & 0 & 0 \\ A & 0 & 0 & 0 \end{pmatrix}$$

- Kanal 2 → Komplement (2 → 1 & 3 & 4)

$$[\,2 \to 1\&3\&4\,] = \begin{pmatrix} 0 & D & 0 & 0 \\ D & 0 & E & B \\ 0 & E & 0 & 0 \\ 0 & B & 0 & 0 \end{pmatrix}$$

- Kanal 3 → Komplement (3 → 1 & 2 & 4)

$$[\,3 \to 1\&2\&4\,] = \begin{pmatrix} 0 & 0 & F & 0 \\ 0 & 0 & E & 0 \\ F & E & 0 & C \\ 0 & 0 & C & 0 \end{pmatrix}$$

- Kanal 4 → Komplement (4 → 1 & 2 & 3)

$$[\,4 \to 1\&2\&3\,] = \begin{pmatrix} 0 & 0 & 0 & A \\ 0 & 0 & 0 & B \\ 0 & 0 & 0 & C \\ A & B & C & 0 \end{pmatrix}$$

In keiner der obigen Konfigurationen kann ein Zustand erreicht werden, in welchem je ein Leckageweg eindeutig gemessen werden kann. Erfindungsgemäß können jedoch alle sechs möglichen Leckagewege durch eine geringe Anzahl von Messungen auf Leckage untersucht werden, d.h. es kann mit weniger als sechs Messungen für jeden Leckageweg eine Dichtheitsprüfung erfolgen.

Dieses Vorgehen wird zunächst an dem hier vorliegenden Beispiel von drei Kanälen und einem umgebenden Volumen demonstriert:

Dazu werden beispielsweise die folgenden drei Messkonfigurationen (also die folgenden drei kombinierten Leckagewege) untersucht: 14->23, 24->13 und 34->12, wobei die Ziffern vor dem Pfeil jeweils die Kanäle, für die ein Eingangszustand aufgebracht wird, angeben (also die Eingangskonfiguration) und die Ziffern nach dem Pfeil die Kanäle angeben, an denen gemessen wird (also die Ausgangskonfiguration). Beispielsweise bedeutet "14->23" also, dass an den Kanälen 1 und 4 ein gemeinsamer Eingangszustand aufgebracht wird, und dass an den Kanälen 2 und 3 gemessen wird.

Für diese drei Konfigurationen ergeben sich dann die folgenden Matrizen:

1.

$$[14 \to 23] = \begin{pmatrix} 0 & 1D & 1F & 0 \\ 1D & 0 & 0 & 1B \\ 1F & 0 & 0 & 1C \\ 0 & 1B & 1C & 0 \end{pmatrix}$$

2.

$$[24 \rightarrow 13] = \begin{pmatrix} 0 & 1D & 0 & 1A \\ 1D & 0 & 1E & 0 \\ 0 & 1E & 0 & 1C \\ 1A & 0 & 1C & 0 \end{pmatrix}$$

und

3.

$$[34 \rightarrow 12] = \begin{pmatrix} 0 & 0 & 1F & 1A \\ 0 & 0 & 1E & 1B \\ 1F & 1E & 0 & 0 \\ 1A & 1B & 0 & 0 \end{pmatrix}.$$

Dabei ergibt sich ein Eintrag von 1 in der Matrix jeweils für diejenigen Elemente, bei denen die Zeilennummer einem Kanal aus der Eingangskonfiguration entspricht und die Spaltennummer einem Kanal aus der Ausgangskonfiguration entspricht. Damit ist auch anschaulich klar, warum auf der Hauptdiagonalen nur 0 als Eintrag stehen kann (denn bei einflussfreien Messkonfigurationen kann kein Kanal sowohl in der Eingangskonfiguration als auch in der Ausgangskonfiguration enthalten sein.

Beispielsweise sind so für die Messkonfiguration 14->23 die Einträge an folgenden Einträgen der Matrix gleich 1:

- Zeile 1, Spalte 2
- Zeile 1, Spalte 3
- Zeile 4, Spalte 2,
- Zeile 4, Spalte 3.

Zusätzlich sind die Einträge, die sich durch Transposition (also durch "Vertauschen" von Zeile und Spalte) ergeben gleich 1. Im Beispiel der Messkonfiguration 14->23 sind das die folgenden Einträge der Matrix:

- Spalte 1, Zeile 2
- Spalte 1, Zeile 3
- Spalte 4, Zeile 2,
- Spalte 4, Zeile 3.

Alle anderen Einträge sind 0.

Die Summe dieser Matrizen für die ausgewählten Messkonfigurationen resultiert dabei in der folgenden Matrix:

$$[14 \rightarrow 23] + [24 \rightarrow 13] + [34 \rightarrow 12] = \begin{pmatrix} 0 & 2D & 2F & 2A \\ 2D & 0 & 2E & 2B \\ 2F & 2E & 0 & 2C \\ 2A & 2B & 2C & 0 \end{pmatrix}.$$

Die Leckrate aller Leckagewege ist somit

$$L = \frac{1}{2} \cdot (2A + 2B + 2C + 2D + 2E + 2F).$$

Zum Prüfverfahren ist zu bemerken, dass jeder Leckageweg genau 2 Anteile in der resultierenden Summe hat. Ferner sind durch die 3 einflussfreien Messkonfigurationen aus dem Beispiel alle möglichen Leckagewege abgedeckt. Somit sind mit der Messung von 3 einflussfreien Konfigurationen alle 6 Leckagewege vollständig bestimmt.

Bei weiterer Analyse der zuvor erzeugten Matrizen kann man sehen, dass die Messung nach zwei Messkonfigurationen ausreicht, um integral alle 6 Leckagewege vermessen zu haben. Dies wird in der Summe der zwei Matrizen, die den zwei Messkonfigurationen entsprechen, dadurch symbolisiert, dass kein Eintrag jenseits der Spur mit 0 identisch ist.

Somit reichen zwei Messungen (entsprechend zwei Messkonfigurationen aus den obigen drei Messkonfigurationen 14->23, 24->13 und 34->12) aus, um eine Prüfung zu ermöglichen. Dabei können in diesem Beispiel zwei Messungen als hinreichendes Prüfkriterium gesehen werden, bspw:

$$[14 \rightarrow 23] = \begin{pmatrix} 0 & 1D & 1F & 0 \\ 1D & 0 & 0 & 1B \\ 1F & 0 & 0 & 1C \\ 0 & 1B & 1C & 0 \end{pmatrix}$$

und

$$[34 \rightarrow 12] = \begin{pmatrix} 0 & 0 & 1F & 1A \\ 0 & 0 & 1E & 1B \\ 1F & 1E & 0 & 0 \\ 1A & 1B & 0 & 0 \end{pmatrix}$$

ergibt:

$$[14 \rightarrow 23] + [34 \rightarrow 12] = \begin{pmatrix} 0 & 1D & 2F & 1A \\ 1D & 0 & 1E & 2B \\ 2F & 1E & 0 & 1C \\ 1A & 2B & 1C & 0 \end{pmatrix}.$$

Mit diesen beiden Messkonfigurationen (14->23 und 34->12) kann also zunächst überprüft werden, ob ein Leck vorliegt oder nicht. Falls keine der beiden Messkonfigurationen ein Leck aufweist, kann daraus geschlossen werden, dass das Bauteil insgesamt kein Leck enthält.

Falls mindestens eine der beiden Messkonfigurationen ein Leck enthält (also falls mindestens ein Leck von einem Kanal aus der Eingangskonfiguration zu einem Kanal aus der Ausgangskonfiguration der betreffenden Messkonfiguration vorliegt), kann eine weitere Bestimmung und Quantifizierung der Leckagewege erfolgen.

Zur genauen Bestimmung und Quantifizierung der Leckagewege kann dann eine Messkonfiguration gefunden werden, welche die Einflüsse der Leckagewege miteinander verrechnet um schlussendlich die Größe eines einzelnen Leckageweges zu bestimmen.

Beispielsweise können die folgenden vier Messkonfigurationen betrachtet werden:

4.

$$[4 \rightarrow 123] = \begin{pmatrix} 0 & 0 & 0 & 1A \\ 0 & 0 & 0 & 1B \\ 0 & 0 & 0 & 1C \\ 1A & 1B & 1C & 0 \end{pmatrix}$$

5.

$$[234 \rightarrow 1] = \begin{pmatrix} 0 & 1D & 1F & 1A \\ 1D & 0 & 0 & 0 \\ 1F & 0 & 0 & 0 \\ 1A & 0 & 0 & 0 \end{pmatrix}$$

6.

$$[134 \rightarrow 2] = \begin{pmatrix} 0 & 1D & 0 & 0 \\ 1D & 0 & 1E & 1B \\ 0 & 1E & 0 & 0 \\ 0 & 1B & 0 & 0 \end{pmatrix}$$

7.

$$[124 \rightarrow 3] = \begin{pmatrix} 0 & 0 & 1F & 0 \\ 0 & 0 & 1E & 0 \\ 1F & 1E & 0 & 1C \\ 0 & 0 & 1C & 0 \end{pmatrix}.$$

Durch geeignete Kombination der Gleichungen 1, 2, 3, 4, 5, 6 und 7 können die Beiträge des gewünschten Leckagewegs ermittelt werden.

Beispielsweise, ohne darauf beschränkt zu sein, soll nun der Beitrag von A ermittelt werden. Dies kann beispielsweise durch die folgenden drei Gleichungen 8, 9 und 10 erfolgen:

8. Summe der Gleichungen 5, 2, 3, 4;
9. Summe der Gleichungen 6, 7, 1; und
10. Differenz der Gleichungen 9 und 8.

Die Gleichungen lauten dann:

8.

$$[5. + 2. + 3. + 4.] = \begin{pmatrix} 0 & 2D & 2F & 4A \\ 2D & 0 & 2E & 2B \\ 2F & 2E & 0 & 2C \\ 4A & 2B & 2C & 0 \end{pmatrix}$$

9.

$$[6. + 7. + 1.] = \begin{pmatrix} 0 & 2D & 2F & 0 \\ 2D & 0 & 2E & 2B \\ 2F & 2E & 0 & 2C \\ 0 & 2B & 2C & 0 \end{pmatrix}$$

10.

$$[8. - 9.] = \begin{pmatrix} 0 & 0 & 0 & 4A \\ 0 & 0 & 0 & 0 \\ 0 & 0 & 0 & 0 \\ 4A & 0 & 0 & 0 \end{pmatrix}$$

Gleichung 10 enthält nun nur noch Anteile von 4*A. Der Leckageweg A ist damit ermittelt. Analog dazu wird ebenfalls beispielsweise, ohne darauf beschränkt zu sein, soll nun der Beitrag von E ermittelt werden. Dazu können die folgenden Gleichungen verwendet werden:

11.

$$[6.+7.+3.+2.] = \begin{pmatrix} 0 & 2D & 2F & 2A \\ 2D & 0 & 4E & 2B \\ 2F & 4E & 0 & 2C \\ 2A & 2B & 2C & 0 \end{pmatrix}$$

und

12.

$$[5.+2.+3.+4.] = \begin{pmatrix} 0 & 2D & 2F & 2A \\ 2D & 0 & 0 & 2B \\ 2F & 0 & 0 & 2C \\ 2A & 2B & 2C & 0 \end{pmatrix}$$

folgt

13.

$$[11.-12.] = \begin{pmatrix} 0 & 0 & 0 & 0 \\ 0 & 0 & 4E & 0 \\ 0 & 4E & 0 & 0 \\ 0 & 0 & 0 & 0 \end{pmatrix}.$$

Auch hier ist der Leckageweg E durch 4*E vollständig bestimmt, wie sich aus Gleichung 13 ergibt.

Es zeigt sich, dass je eine Gleichung für je einen Leckageweg gefunden werden kann.

Als Verallgemeinerung kann aus der Matrixschreibeise abgeleitet werden: Ein Set aus Messkonfigurationen wird derart ausgewählt, so dass in Summe der gewählten Konfigurationen jeder Matrixeintrag jenseits der Spur mindestens den Wert 1 erhält.

Eine bevorzugte Auswahlregel umfasst hierbei die Verallgemeinerung auf eine Anzahl von n Kanälen, wobei n eine natürliche Zahl größer oder gleich 2 ist. Es werden jeweils zwei Kanäle in den gleichen Zustand (beispielsweise Druck oder Messen) versetzt, wobei einer der Kanäle immer der umgebende Kanal n ist. Die komplementären Kanäle sind dann im jeweils anderen Zustand.

Beispielsweise und ohne Beschränkung werden die Kanäle nacheinander die Kanäle 1, 2, 3, 4, ..., und n-1, immer zusammen mit dem umgebenden Kanal n auf einen vorgegebenen Eingangszustand gebracht (beispielsweise bedrückt).

Die Summe der Koeffizientenmatrizen für die entsprechenden Messkonfigurationen - ein Set - ergibt die allgemeine Form:

$$Summe\ des\ Sets = \begin{pmatrix} 0 & 2 & 2 & \dots & n-2 \\ 2 & 0 & 2 & \dots & n-2 \\ 2 & 2 & 0 & \dots & n-2 \\ \vdots & \vdots & \vdots & \ddots & n-2 \\ n-2 & n-2 & n-2 & \dots & 0 \end{pmatrix}.$$

Nach diesem Vorgehen ist es möglich:

- je ein Prüfverfahren mit einer Minimalanzahl von Messkonfigurationen (also einem Set) zu generieren und
- je einen Satz von Gleichungen zu ermitteln, um jede einzelne Leckrate eines Systems aus n Kanälen zu finden.

Im Folgenden werden die einzelnen Schritte näher erläutert.

1. Bestimmung aller Eingangs- bzw. Ausgangskonfigurationen:

Die Anzahl aller möglichen Eingangskonfigurationen bzw. aller möglichen Ausgangskonfigurationen kann mathematisch durch die Anzahl von Kombinationen k-ter Klasse von n verschiedenen Elementen ohne Wiederholung beschrieben werden. Dabei symbolisiert n die Gesamtanzahl der Kanäle inklusive eines umgebenden Volumens. Die k-te Klasse ist dabei die Anzahl jener Kanäle, die druckbeaufschlagt werden können und/oder die zu einem Messvolumen zusammengelegt werden können. Das Messvolumen kann sämtliche Kanäle (oder eine Teilmenge davon) des Bauteils und/oder ein umgebendes Volumen (welches auch als umgebendes Messvolumen bezeichnet werden kann) beinhalten, die direkt mit einer Messeinrichtung verbunden sind. Die Berechnung der Anzahl erfolgt somit mittels der Binomialkoeffizienten $\binom{n}{k} = (n \text{ über } k)$ wobei gilt, dass k alle natürlichen Zahlen zwischen 1 und n-1 annimmt (weil mindestens ein Kanal in der entsprechenden Eingangs- bzw. Ausgangskombination vorhanden ist, und weil es keinen Sinn ergibt, dass alle n-1 Kanäle und gleichzeitig das umgebende Volumen in der Eingangs- bzw. Ausgangskonfiguration enthalten ist). Die Summe der aus diesen Werten bestimmten Binomialkoeffizienten spiegelt dann zunächst die Anzahl der möglichen Kanalkombinationen wider. Diese Summe lässt sich mit $2^n-2$ angeben.

In einem nicht erschöpfenden Beispiel ergibt sich für drei (3) Kanäle und genau ein umgebendes Volumen n=4. Somit sind die Werte für k = {1;2;3}. Daraus resultiert (4 über 1) = 4; (4 über 2) = 6 und (4 über 3) = 4 mit dem Ergebnis, dass in diesem Fall 4+6+4 = 14 (=$2^4$-2) mögliche Kombinationen der Kanäle existieren: 4 Möglichkeiten je einen Kanal zu verschalten, 6 Möglichkeiten je zwei Kanäle zu verschalten, und 4 Möglichkeiten je 3 Kanäle zu verschalten.

2. Auswahl von einflussfreien Messkonfigurationen:

Unter den Kombinationen aller möglichen Eingangskonfigurationen mit allen möglichen Ausgangskonfigurationen befinden sich auch jene, wo die Kombination der zu beaufschlagenden Kanäle mit der Kombination der zu messenden Kanäle komplementär ist. Diese Kombinationen werden als einflussfreie Kombinationen bezeichnet. In den einflussfreien Kombinationen führen alle durchströmten Leckagewege direkt in das Messvolumen, es werden also direkt alle möglichen Leckagewege gleichzeitig vermessen. Das Messsignal entspricht somit der Summe der Leckageraten der einzelnen Leckagekanäle.

Zur Ermittlung der einflussfreien Messkonfigurationen werden die Permutationen aller möglichen Kanäle als Ziffern aufgefasst und derart notiert, dass die Ziffernfolge die kleinstmögliche Zahl darstellt. In einem nicht erschöpfenden Beispiel ist eine Messkonfiguration 431 -> 65. Die kleinsten möglichen Ziffern sind somit 134 und 56. Eine Messkonfiguration kann also geschrieben werden als "Eingangskonfiguration -> Ausgangskonfiguration".

Alle so dargestellten Eingangskonfigurationen werden - unter Vermeidung von Dopplungen - zeilenweise in aufsteigender Reihenfolge in ein Raster abgetragen. Spaltenweise werden ebendiese Zahlen (die die Ausgangskonfiguration darstellen) in aufsteigender Reihenfolge von links nach rechts abgetragen. Das resultierende Raster bzw. die resultierende Matrix (bei der jeder Matrixeintrag, also jedes Element der Matrix, eine aus Zeile und Spalte sich ergebende Messkonfiguration darstellt) kann nun ausgewertet werden. Kreuzen sich Zahlen mit identischen Ziffern (ist also gemäß dem entsprechenden Matrixeintrag ein Kanal sowohl in der Eingangskonfiguration als auch in der Ausgangskonfiguration enthalten), so ist dies keine gültige Messkonfiguration. Kreuzen sich Zahlen, welche in jeder ihrer Ziffern verschieden sind (in denen also kein Kanal gleichzeitig in der Eingangskonfiguration und in der Ausgangskonfiguration enthalten ist), so ist dies eine zulässige Messkonfiguration. Mit diesem Vorgehen wird sich eine Diagonale innerhalb dieses Rasters ausbilden, welche gleichzeitig die längste Diagonale in dieser Abbildung darstellt. Diese Diagonale zeigt diejenigen einflussfreien Messkonfigurationen auf, in denen gleichzeitig jeder Kanal und das umgebende Volumen entweder in der Eingangskonfiguration oder der Ausgangskonfiguration enthalten ist. Die Zeileneinträge können dabei die mit Prüfgas zu füllenden Kanäle darstellen und die Spalteneinträge symbolisieren ein Messvolumen.

In einem nicht erschöpfenden Beispiel wird hierbei bevorzugt der Leckageweg in das äußere Messvolumen immer mit der größten Ziffer symbolisiert. Dabei wird der Leckage in das umgebende Messvolumen derart besondere Bedeutung beigemessen, dass ausgewählte Konfigurationen immer die größte Ziffer im Messvolumen haben.

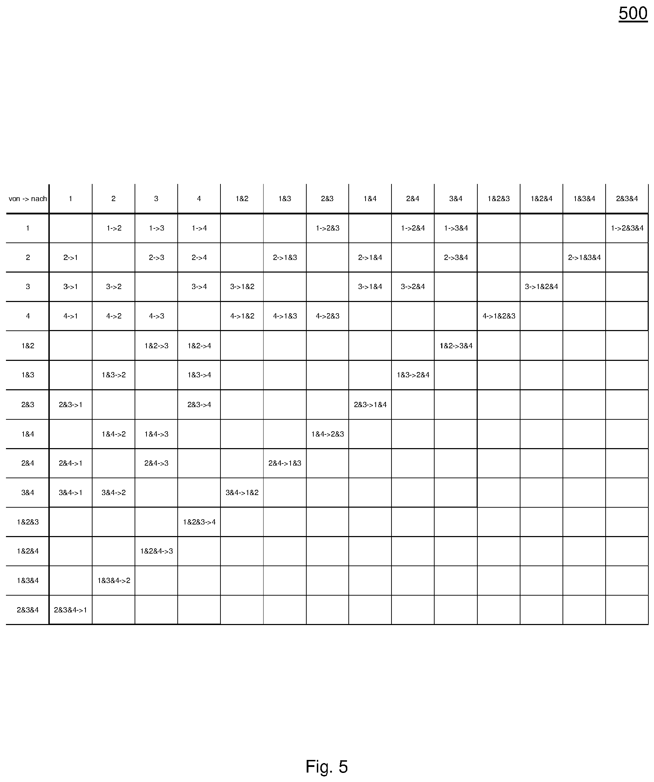

Fig. 5 zeigt schematisch alle Messkonfigurationen 500 gemäß einer Ausführungsform für ein kanalführendes Bauteil in einer zur Leckagemessung ausgebildeten Vorrichtung, wobei das kanalführende Bauteil über drei Kanäle 1, 2 und 3 verfügt und in einem Volumen 4 eingebettet ist. Ein solches Bauteil ist beispielsweise in Fig. 3 gezeigt.

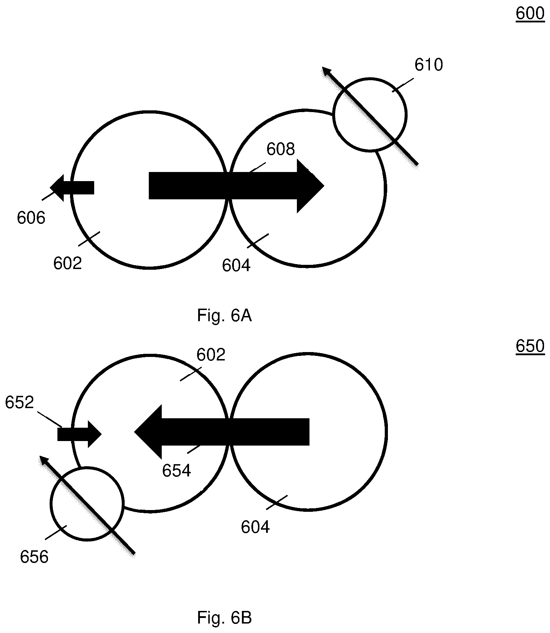

Fig. 6A und Fig. 6B zeigen schematisch Messkonfigurationen 600 und 650 gemäß einer Ausführungsform, welche nur bekannte Einflüsse der Leckagewege aufzeigen. In Fig. 6A sind ein erster Kanal 602 und ein zweiter Kanal 604 dargestellt. Dabei soll der Fall dargestellt sein, bei dem der erste Kanal sowohl gegenüber einem umgebenden Volumen als auch gegenüber dem zweiten Kanal 604 eine Leckage hat.

Wenn, wie in Fig. 6A eine Messvorrichtung 610 mit dem zweiten Kanal 604 verbunden ist, kann damit aber nur eine Leckage 608 des ersten Kanals 602 zu dem zweiten Kanal 608 ermittelt werden, nicht aber eine Leckage 606 von dem ersten Kanal 602 zum umgebenden Volumen.

Wenn, wie in Fig. 6B, eine Messvorrichtung 656 mit dem ersten Kanal 602 verbunden ist, kann damit sowohl eine Leckage 654 des ersten Kanals 602 zu dem zweiten Kanal 604 ermittelt werden, als auch eine Leckage 652 von dem ersten Kanal 602 zum umgebenden Volumen.

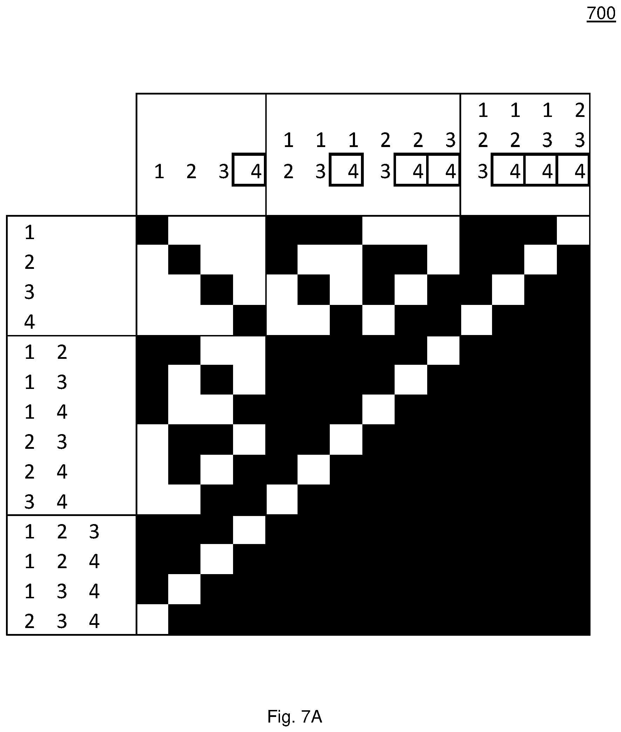

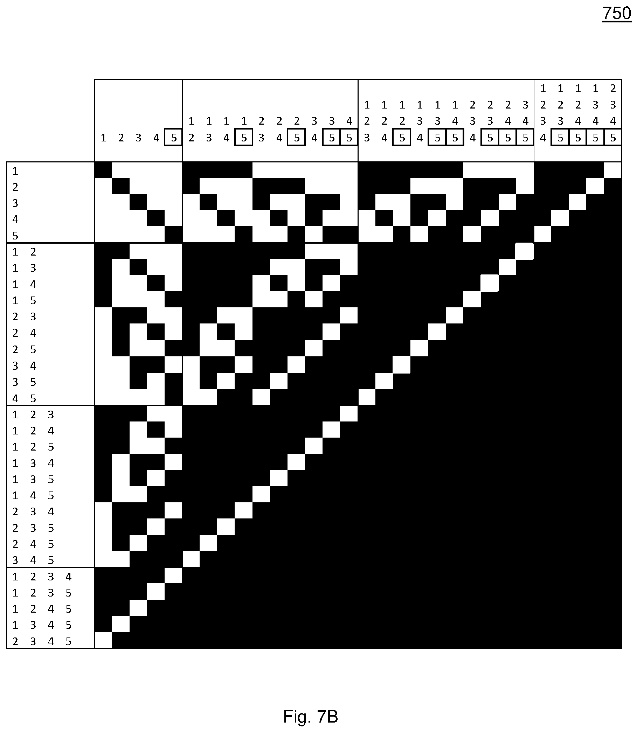

In Fig. 7A und 7B wird exemplarisch das Auffinden von einflussfreien Messkonfigurationen gezeigt. Die Nummern an den Zeilen symbolisieren die Konfiguration der Kanäle, welche mit einem Prüfgas befüllt werden (also die Eingangskonfigurationen). Die senkrecht zu lesenden Nummern an den Spalten symbolisieren jeweils die Kanäle, die zu einem Messvolumen zusammengeschaltet werden (also die Ausgangskonfigurationen).

Fig. 7A zeigt ein Diagramm 700 für ein System aus einem kanalführenden Bauteil mit 3 internen Kanälen und einem äußeren umgebenden Volumen, in dem die möglichen Messkonfigurationen grafisch dargestellt sind. Dies entspricht der Anordnung wie in Fig. 5, jedoch mit einer anderen Reihenfolge der Zeilen und Spalten. Die geschwärzten Felder stellen dabei Kombinationen dar, welche nicht zu messen sind. Die weißen Felder stellen jene Wege dar, welche zur Messung geeignet sind. Die Diagonale, welche von der unteren linken Ecke des Diagramms zur oberen rechten Ecke des Diagramms läuft (also die Nebendiagonale der dargestellten Matrix), bildet dabei die einflussfreien Messkonfigurationen ab, bei denen jeder Kanal in der Messkonfiguration auftritt.

Fig. 7B zeigt ein Diagramm 750 mit möglichen Messkonfigurationen für ein System aus einem kanalführenden Bauteil mit 4 internen Kanälen und einem äußeren umgebenden Volumen.

3. Messen der ausgewählten Messkonfigurationen

Für ein System aus n-1 Kanälen und einem umgebenden Messvolumen kann die Anzahl der zu erwartenden Leckagewege L durch die Gleichung

$$L = 0{,}5\ (n^2\text{-}n)$$

ausgedrückt werden. Die Anzahl der einflussfreien Messkonfigurationen K, welche alle Kanäle und das umgebende Messvolumen enthalten, entwickelt sich nach der Gleichung:

$$K = \sum_{k=1}^{n-1} \binom{n}{k} = 2^n - 2.$$

Somit wachsen sogar die einflussfreien Konfigurationen schneller als die Leckagewege. Aus diesen können nun weitere Konfigurationen ausgewählt werden, so dass integral alle relevanten Leckagewege gemessen werden können.

Diese Auswahl kann dabei derart erfolgen, dass in einem Set einflussfreier Messkonfiguration jeder Kanal mindestens zweimal vertreten ist. Das umgebende Messvolumen kann in jeder Konfiguration enthalten sein.

Beispielsweise, und ohne darauf beschränkt zu sein, kann ein Set für ein System aus 3 Kanälen mit einem umgebenden Messvolumen wie folgt aussehen:

| Prüfgas Einlass: | Messvolumen: |
|---|---|
| 1 & 2 | 3 & 4 |
| 2 & 3 | 1 & 4 |
| 3 & 1 | 2 & 4 |

"Prüfgas Einlass" kann dabei als Eingangskonfiguration verstanden werden.

"Messvolumen" kann dabei als Ausgangskonfiguration verstanden werden.

Mit diesem Set (also mit dieser Teilmenge von Messkonfigurationen, insbesondere als Teilmenge von einflussfreien Messkonfigurationen) kann nun ein Vielfaches der integralen Leckrate bestimmt werden und somit können zeitaufwendige Einzelmessungen ersetzt werden, wie es oben beispielhaft für den Fall von drei Kanälen und allgemein für den Fall von n-1 Kanälen und jeweils einem umgebenden Volumen beschrieben ist.

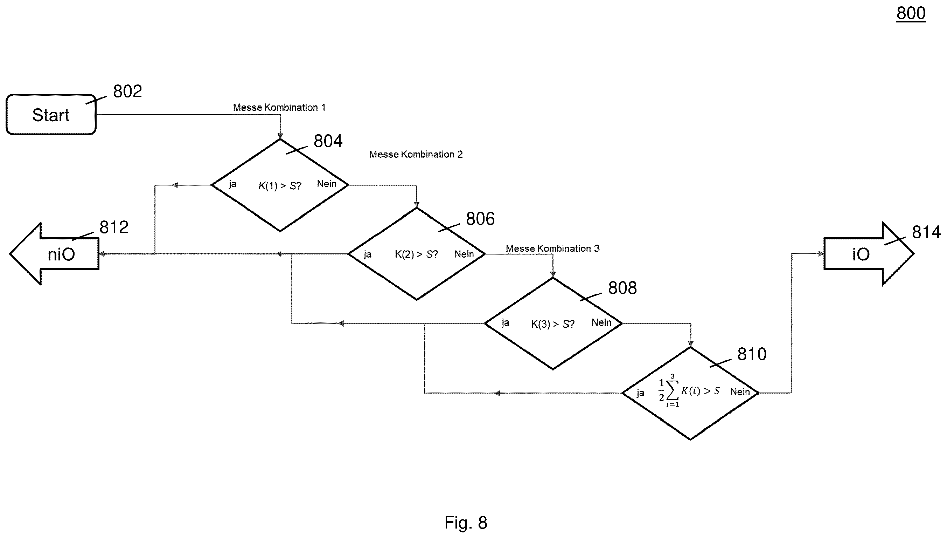

Fig. 8 zeigt ein Flussdiagramm 800 eines Ablaufs einer vollständigen Prüfung einer kanalführenden Platte mit drei Kanälen sowie einem umgebenden Messvolumen gemäß einer Ausführungsform. Nach dem Start der Prüfung in 802 wird in 804 zunächst die zuvor verfahrensgemäß definierte Kombination 1 gemessen. Liegt das Messergebnis oberhalb eines gegebenen Schwellwertes, wird die Prüfung in 812 mit dem Ergebnis "niO" (nicht in Ordnung, es tritt also unzulässig hohe Leckage auf) beendet. Im Falle des Unterschreitens des Schwellwertes wird in 806 die zuvor verfahrensgemäß definierte Kombination 2 gemessen. Liegt dieses Messergebnis oberhalb des gegebenen Schwellwertes, wird die Prüfung in 812 mit dem Ergebnis "niO" beendet. Im Falle des Unterschreitens des Schwellwertes wird in 808 die zuvor verfahrensgemäß definierte Kombination 3 gemessen. Liegt das Messergebnis oberhalb eines gegebenen Schwellwertes, wird die Prüfung in 812 mit dem Ergebnis "niO" beendet. Im Falle des Unterschreitens des Schwellwertes wird in 810 die Summe aller bisherigen Messwerte gebildet. Überschreitet diese Summe einen vorgegebenen Wert (beispielsweise den doppelten Schwellwert), so wird in 812 die Prüfung mit "niO" beendet. Andernfalls wird in 814 die Prüfung mit dem Ergebnis "iO" (in Ordnung, es tritt also keine unzulässig hohe Leckage auf) abgeschlossen.

Das erfindungsgemäße Verfahren bietet gegenüber einer üblichen Handhabe den Vorteil, dass eine starke Verkürzung der Messzeiten erreicht werden kann. Eine übliche Handhabe ist dadurch charakterisiert, dass jeweils eine Messung einen vermeintlichen Leckageweg untersucht. Bei diesem Vorgehen muss eine Vielzahl von möglichen Leckagewegen vermessen werden, um bspw. jenen Leckageweg mit der größten Leckrate zu identifizieren. Nachdem ein solcher Leckageweg durch eine geeignete Messkonfiguration gefunden ist, kann anhand der Höhe des gemessenen Signals geprüft werden, ob die Prüfung bestanden ist oder nicht.

Gemäß verschiedener Ausführungsformen kann durch das zielgerichtete Auswählen von Messkonfigurationen und das anschließende Vermessen dieser ausgewählten Messkonfigurationen in Kombination mit einer sequenziellen Beaufschlagung der Prüfobjekte mit unterschiedlichen Prüfgasen, z. B. Helium (Masse 4) in unterschiedlichen Konzentrationen, Wasserstoff (Masse 2) in unterschiedlichen Konzentrationen sowie einem Prüfgas mit der Masse 3 in unterschiedlichen Konzentrationen das jeweils nachfolgende Prüfgas als Spülgas für das im vorherigen Prozessschritt eingesetzte Prüfgas wirken. Langsame Gasaustauschzeiten werden also durch schnelle Umschaltzeiten am eingesetzten Detektor ersetzt.

Somit sind kürzere Taktzeiten bzw. höhere Durchsätze in einem industriellen Umfeld erzielbar. Letzteres stellt einen hohen wirtschaftlichen Vorteil dar. Dies ist insofern vorteilhaft, da dadurch ein hohes Maß an Wirtschaftlichkeit hergestellt werden kann, insbesondere deshalb, da eine häufig zeitaufwendige Prüfung bzw. Bauteilqualifizierung deutlich beschleunigt werden kann und den Preis des geprüften Produktes verringern kann.

Vereinfacht ausgedrückt wird bei dem erfindungsgemäßen Verfahren nicht auf Signalerholung bei einem Prüfgas mit einer bestimmten Masse gewartet, sondern einfach in eine andere Messkonfiguration mit einem weiteren Prüfgas umgeschaltet.

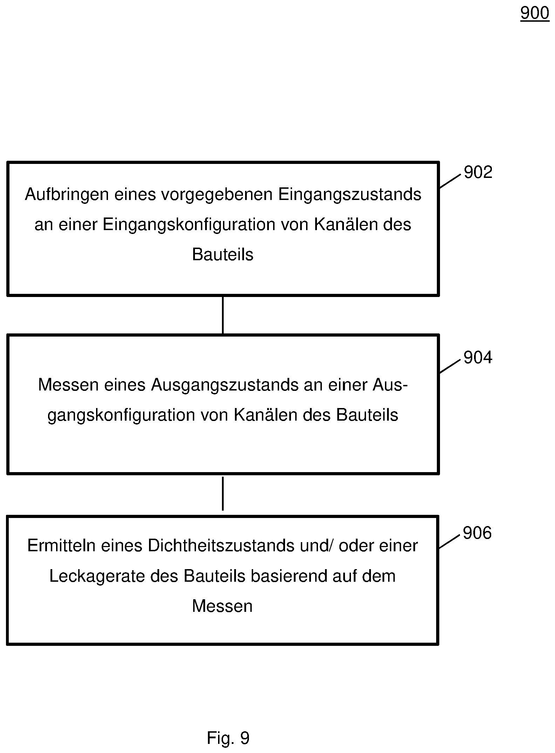

Fig. 9 zeigt ein Flussdiagramm 900, das ein Verfahren zur Dichtheitsprüfung und/oder Leckagemessung eines Bauteils mit einer Mehrzahl von Kanälen gemäß einer Ausführungsform veranschaulicht. In 902 wird ein vorgegebener Eingangszustands an einer Eingangskonfiguration von Kanälen des Bauteils aufgebracht. In 904 wird ein Ausgangszustand an einer Ausgangskonfiguration von Kanälen des Bauteils gemessen. In 906 wird ein Dichtheitszustands und/oder eine Leckagerate des Bauteils basierend auf dem Messen ermittelt. Die Eingangskonfiguration enthält mindestens zwei Kanäle des Bauteils und die Ausgangskonfiguration enthält mindestens einen anderen Kanal des Bauteils; oder die Eingangskonfiguration enthält mindestens einen Kanal des Bauteils und die Ausgangskonfiguration enthält mindestens zwei andere Kanäle des Bauteils.

In einer Ausführungsform enthält oder ist der Eingangszustand ein vorgegebener Druck und/oder eine vorgegebene Konzentration und/oder ein vorgegebenes chemisches Element und/oder eine vorgegebene chemische Verbindung und/oder eine vorgegebene Mischung von chemischen Stoffen, und das Messen des Ausgangszustands enthält oder ist ein Detektieren eines Druckes und/oder einer Konzentration und/oder des vorgegebenen chemischen Elements und/oder der vorgegebenen chemischen Verbindung und/oder der vorgegebenen Mischung von chemischen Stoffen.

In einer Ausführungsform wird das Aufbringen und das Messen für eine Mehrzahl von unterschiedlichen Messkonfigurationen ausgeführt, wobei jede Messkonfiguration eine bestimmte Eingangskonfiguration und eine bestimmte Ausgangskonfigurationen enthält, wobei der Dichtheitszustands und/oder die Leckagerate des Bauteils basierend auf dem Aufbringen und dem Messen für die Mehrzahl von unterschiedlichen Messkonfigurationen ermittelt wird.

In einer Ausführungsform enthält oder ist der jeweilige Eingangszustand für aufeinanderfolgende Messungen unterschiedliche Drücke und/oder unterschiedliche Konzentrationen und/oder unterschiedliche chemische Elemente und/oder unterschiedliche chemische Verbindungen und/oder unterschiedliche Mischungen von chemischen Stoffen.

In einer Ausführungsform wird die Mehrzahl von unterschiedlichen Messkonfigurationen so ermittelt, dass jeder Kanal in Kombination mit jedem anderen Kanal in mindestens einer Messkonfiguration der Mehrzahl von Messkonfigurationen auftritt.

In einer Ausführungsform wird eine jeweilige Leckagerate für die Mehrzahl von Messkonfigurationen ermittelt und es wird eine Leckagerate zwischen zwei Kanälen basierend auf den jeweiligen Leckageraten für die Mehrzahl von Messkonfigurationen ermittelt.

Mit dem Verfahren gemäß verschiedener Ausführungsformen ist eine Anpassung an sich ändernde Geometrien bei sich ändernden kanalführenden Bauteilen, beispielsweise Bipolarplatten, möglich. Des Weiteren kann eine Druckbeaufschlagung der Umgebung des kanalführenden Bauteils erfolgen.

Es versteht sich, dass alle Ausführungsformen, die beispielhaft für eine BPP beschrieben wurden, allgemein für jegliches kanalführende Bauteil angewendet werden können.

**Bezugszeichenliste**

| | |
|---|---|
| 100 | schematischer Aufbau einer Messanordnung gemäß einer Ausführungsform |

| | |
|---|---|
| 102 | Vorrichtung gemäß einer Ausführungsform |
| 104 | Bauteil |
| 106, 108, 110, 112, 114, 116 | Kanäle |
| 118 | umgebendes Volumen |
| 120 | Druckvorgabe |
| 122, 124, 126 | Ventile |
| 128 | Messeinrichtung |
| 130, 132, 134, 136 | Ventile |
| 200 | Schnitt durch einen Aufbau einer Vorrichtung gemäß einer Ausführungsform |
| 202 | Aufnahmeeinheit |
| 204 | Bauteil |
| 206 | Druckelement |
| 208 | Bewegungsrichtung |
| 210 | Verschlusselement |
| 212 | Adapterplatte |
| 214 | Eingang/ Ausgang |
| 216 | Dichtung |

| | |
|---|---|
| 300 | Modell eines kanalführenden Bauteils innerhalb der Vorrichtung gemäß einer Ausführungsform |
| 1, 2, 3 | Kanäle |
| 4 | umgebendes Volumen |
| A, B, C, D, E, F, G | theoretisch mögliche Leckagewege |

| | |
|---|---|
| 400 | möglicher Aufbau gemäß einer Ausführungsform mit dem kanalführenden Bauteil aus Fig. 3. |
| 402 | Druckquelle, beispielsweise Vakuumpumpe zur Erzeugung des für die Messung nötigen Druckes |
| 404 | Messvorrichtung |
| 406, 408, 410, 412 | Ventile |

| | |
|---|---|
| 500 | alle Messkonfigurationen gemäß einer Ausführungsform |
| 600 | Messkonfiguration gemäß einer Ausführungsform |
| 602 | erster Kanal |
| 604 | zweiter Kanal |
| 606 | Leckage |
| 608 | Leckage |
| 610 | Messvorrichtung |
| 650 | Messkonfiguration gemäß einer Ausführungsform |
| 652 | Leckage |
| 654 | Leckage |
| 656 | Messvorrichtung |

| | |
|---|---|
| 700, 750 | Illustration eines Auffindens von einflussfreien Messkonfigurationen |

| | |
|---|---|
| 800 | Flussdiagramm eines Ablaufs einer vollständigen Prüfung einer kanalführenden Platte mit drei Kanälen sowie einem umgebenden Messvolumen gemäß einer Ausführungsform |
| 802 | Start |
| 804 | Messung Kombination 1 |
| 806 | Messung Kombination 2 |
| 808 | Messung Kombination 3 |
| 810 | Bildung der Summe aller Messwerte |
| 812 | Ergebnis "niO" |
| 814 | Ergebnis "iO" |

| | |
|---|---|
| 900 | Flussdiagramm, das ein Verfahren zur Dichtheitsprüfung und/oder Leckagemessung eines Bauteils mit einer Mehrzahl von Kanälen gemäß einer Ausführungsform veranschaulicht |
| 902 | Schritt zum Aufbringen eines vorgegebenen Eingangszustands an einer Eingangskonfiguration von Kanälen des Bauteils |
| 904 | Schritt zum Messen eines Ausgangszustands an einer Ausgangskonfiguration von Kanälen des Bauteils |

906 Schritt zum Ermitteln eines Dichtheitszustands und/oder einer Leckagerate des Bauteils basierend auf dem Messen

**Patentansprüche**

1. Verfahren zur Dichtheitsprüfung und/oder Leckagemessung eines Bauteils mit einer Mehrzahl von Kanälen, das Verfahren aufweisend:

   Aufbringen (902) eines vorgegebenen Eingangszustands an einer Eingangskonfiguration von Kanälen des Bauteils;
   Messen (904) eines Ausgangszustands an einer Ausgangskonfiguration von Kanälen des Bauteils; und
   Ermitteln (906) eines Dichtheitszustands und/oder einer Leckagerate des Bauteils basierend auf dem Messen;
   wobei die Eingangskonfiguration mindestens zwei Kanäle des Bauteils aufweist und die Ausgangskonfiguration mindestens einen anderen Kanal des Bauteils aufweist, oder wobei die Eingangskonfiguration mindestens einen Kanal des Bauteils aufweist und die Ausgangskonfiguration mindestens zwei andere Kanäle des Bauteils aufweist;
   **dadurch gekennzeichnet, dass**
   das Aufbringen und das Messen für eine Mehrzahl von unterschiedlichen Messkonfigurationen ausgeführt wird, wobei jede Messkonfiguration eine bestimmte Eingangskonfiguration und eine bestimmte Ausgangskonfiguration aufweist;
   wobei das Verfahren ferner aufweist: Ermitteln der Mehrzahl von unterschiedlichen Messkonfigurationen so, dass jeder Kanal in Kombination mit jedem anderen Kanal in mindestens einer Messkonfiguration der Mehrzahl von Messkonfigurationen auftritt;
   wobei der Dichtheitszustands und/oder die Leckagerate des Bauteils basierend auf dem Aufbringen und dem Messen für die Mehrzahl von unterschiedlichen Messkonfigurationen ermittelt wird; und
   wobei für aufeinanderfolgende Messungen der jeweilige Eingangszustand unterschiedliche Drücke und/oder unterschiedliche Konzentrationen und/oder unterschiedliche chemische Elemente und/oder unterschiedliche chemische Verbindungen und/oder unterschiedliche Mischungen von chemischen Stoffen aufweist.

2. Verfahren nach Anspruch 1,

   wobei der Eingangszustand einen vorgegebenen Druck und/oder eine Vorgegebene Konzentration und/oder ein vorgegebenes chemisches Element und/oder eine vorgegebene chemische Verbindung und/oder eine vorgegebene Mischung von chemischen Stoffen aufweist; und
   wobei das Messen des Ausgangszustands ein Detektieren eines Druckes und/oder einer Konzentration und/oder des vorgegebenen chemischen Elements und/oder der vorgegebenen chemischen Verbindung und/oder der vorgegebenen Mischung von chemischen Stoffen aufweist.

3. Verfahren nach einem der Ansprüche 1 bis 2, ferner aufweisend:

   Ermitteln einer jeweiligen Leckagerate für die Mehrzahl von Messkonfigurationen; und
   Ermitteln einer Leckagerate zwischen zwei Kanälen basierend auf den jeweiligen Leckageraten für die Mehrzahl von Messkonfigurationen.

**Claims**

1. A method for the leak testing and/or leakage measurement of a component comprising a plurality of channels, the method comprising:

   applying (902) a predefined input state to an input configuration of channels of the component;
   measuring (904) an output state at an output configuration of channels of the component; and
   determining (906) a leakage state and/or a leakage rate of the component based on the measurement,
   wherein the input configuration has at least two channels of the component and the output configuration has at least one other channel of the component, or wherein the input configuration has at least one channel of the component and the output configuration has at least two other channels of the component,
   **characterized in that**
   the application and the measurement are performed for a plurality of different measurement configurations, wherein each measurement configuration has a specific input configuration and a specific output configuration;
wherein the method further comprises: determining the plurality of different measurement configurations such that each channel occurs in combination with every other channel in at least one measurement configuration of the plurality of measurement configurations;
wherein the leakage state and/or the leakage rate of the component is/are determined based on the application and the measurement for the plurality of different measurement configurations; and
wherein, for consecutive measurements, the respective input state has different pressures and/or different concentrations and/or different chemical elements and/or different chemical compounds and/or different mixtures of chemical substances.

2. A method according to claim 1,

wherein the input state has a predefined pressure and/or a predefined concentration and/or a predefined chemical element and/or a predefined chemical compound and/or a predefined mixture of chemical substances; and
wherein the measurement of the output state comprises detecting a pressure and/or a concentration and/or the predefined chemical element and/or the predefined chemical compound and/or the predefined mixture of chemical substances.

3. A method according to one of the claims 1 to 2, further comprising:

determining a respective leakage rate for the plurality of measurement configurations; and
determining a leakage rate between two channels based on the respective leakage rates for the plurality of measurement configurations.

**Revendications**

1. Procédé de contrôle d'étanchéité et/ou de mesure de fuite d'un composant ayant une pluralité de canaux, le procédé consistant à :

appliquer (902) un état d'entrée prédéterminé à une configuration d'entrée des canaux du composant ;
mesurer (904) un état de sortie à une configuration de sortie des canaux du composant ; et
déterminer (906) un état d'étanchéité et/ou un taux de fuite du composant en se basant sur la mesure ;
la configuration d'entrée présentant au moins deux canaux du composant et la configuration de sortie présentant au moins un autre canal du composant, ou la configuration d'entrée présentant au moins un canal du composant et la configuration de sortie présentant au moins deux autres canaux du composant ;
**caractérisé en ce que**
l'application et la mesure sont effectuées pour une pluralité de configurations de mesure différentes, chaque configuration de mesure présentant une configuration d'entrée particulière et une configuration de sortie particulière ;
le procédé consistant en outre à :

déterminer la pluralité de configurations de mesure différentes de telle sorte que chaque canal apparaisse en combinaison avec chaque autre canal dans au moins une configuration de mesure de la pluralité de configurations de mesure ;
sachant que l'état d'étanchéité et/ou le taux de fuite du composant est déterminé en se basant sur l'application et de la mesure pour la pluralité de configurations de mesure différentes ; et
que pour des mesures successives, l'état d'entrée respectif présente des pressions différentes et/ou des concentrations différentes et/ou des éléments chimiques différents et/ou des composés chimiques différents et/ou des mélanges différents de substances chimiques.

2. Procédé selon la revendication 1,

dans lequel l'état d'entrée présente une pression prédéterminée et/ou une concentration prédéterminée et/ou un élément chimique prédéterminé et/ou un composé chimique prédéterminé et/ou un mélange prédéterminé de substances chimiques ; et
la mesure de l'état de sortie consiste à détecter une pression et/ou une concentration et/ou l'élément chimique prédéterminé et/ou le composé chimique prédéterminé et/ou le mélange prédéterminé de substances chimiques.

3. Procédé selon l'une des revendications 1 ou 2, consistant en outre à :

déterminer un taux de fuite respectif pour la pluralité de configurations de mesure ; et
déterminer un taux de fuite entre deux canaux en se basant sur les taux de fuite respectifs pour la pluralité de configurations de mesure.

Fig. 1

Fig. 2

300

Fig. 3

Fig. 4

500

| von -> nach | 1 | 2 | 3 | 4 | 1&2 | 1&3 | 2&3 | 1&4 | 2&4 | 3&4 | 1&2&3 | 1&2&4 | 1&3&4 | 2&3&4 |
|---|---|---|---|---|---|---|---|---|---|---|---|---|---|---|
| 1 | | 1->2 | 1->3 | 1->4 | | | 1->2&3 | | 1->2&4 | 1->3&4 | | | | 1->2&3&4 |
| 2 | 2->1 | | 2->3 | 2->4 | | 2->1&3 | | 2->1&4 | | 2->3&4 | | | 2->1&3&4 | |
| 3 | 3->1 | 3->2 | | 3->4 | 3->1&2 | | | 3->1&4 | 3->2&4 | | | 3->1&2&4 | | |
| 4 | 4->1 | 4->2 | 4->3 | | 4->1&2 | 4->1&3 | 4->2&3 | | | | 4->1&2&3 | | | |
| 1&2 | | | 1&2->3 | 1&2->4 | | | | | | 1&2->3&4 | | | | |
| 1&3 | | 1&3->2 | | 1&3->4 | | | | | 1&3->2&4 | | | | | |
| 2&3 | 2&3->1 | | | 2&3->4 | | | | 2&3->1&4 | | | | | | |
| 1&4 | | 1&4->2 | 1&4->3 | | | | 1&4->2&3 | | | | | | | |
| 2&4 | 2&4->1 | | 2&4->3 | | | 2&4->1&3 | | | | | | | | |
| 3&4 | 3&4->1 | 3&4->2 | | | 3&4->1&2 | | | | | | | | | |
| 1&2&3 | | | | 1&2&3->4 | | | | | | | | | | |
| 1&2&4 | | | 1&2&4->3 | | | | | | | | | | | |
| 1&3&4 | | 1&3&4->2 | | | | | | | | | | | | |
| 2&3&4 | 2&3&4->1 | | | | | | | | | | | | | |

Fig. 5

600

610

608

606

602          604

Fig. 6A

650

602

652

654

604

656

Fig. 6B

700

Fig. 7A

750

Fig. 7B

800

Start

802

Messe Kombination 1

804

$K(1) > S?$

ja — Nein

Messe Kombination 2

806

$K(2) > S?$

ja — Nein

Messe Kombination 3

808

$K(3) > S?$

ja — Nein

810

$\frac{1}{2}\sum_{i=1}^{3} K((i) > S$

ja — Nein

814

iO

812

niO

Fig. 8

900

Aufbringen eines vorgegebenen Eingangszustands an einer Eingangskonfiguration von Kanälen des Bauteils /902

Messen eines Ausgangszustands an einer Ausgangskonfiguration von Kanälen des Bauteils /904

Ermitteln eines Dichtheitszustands und/ oder einer Leckagerate des Bauteils basierend auf dem Messen /906

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 113188726 A
- CN 110987324 A

- WO 2022099409 A1